(19) Europäisches Patentamt / European Patent Office / Office européen des brevets

(11) **EP 4 447 158 A1**

(12) **EUROPEAN PATENT APPLICATION**
published in accordance with Art. 153(4) EPC

(43) Date of publication:
**16.10.2024 Bulletin 2024/42**

(21) Application number: **23827540.8**

(22) Date of filing: **22.06.2023**

(51) International Patent Classification (IPC):
$H01M\ 4/36^{(2006.01)}$    $H01M\ 4/525^{(2010.01)}$
$H01M\ 4/505^{(2010.01)}$    $H01M\ 4/131^{(2010.01)}$
$H01M\ 10/052^{(2010.01)}$    $H01M\ 4/02^{(2006.01)}$

(52) Cooperative Patent Classification (CPC):
**H01M 4/02; H01M 4/131; H01M 4/36; H01M 4/505;
H01M 4/525; H01M 10/052;** Y02E 60/10

(86) International application number:
**PCT/KR2023/008680**

(87) International publication number:
**WO 2023/249431 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.06.2022 KR 20220077414**

(71) Applicant: **LG Chem, Ltd.
Yeongdeungpo-gu
Seoul 07336 (KR)**

(72) Inventors:
• **KWAK, No Woo
Daejeon 34122 (KR)**

• **HAN, Song Yi
Daejeon 34122 (KR)**
• **EOM, Jun Ho
Daejeon 34122 (KR)**
• **YE, Seong Ji
Daejeon 34122 (KR)**
• **LEE, Jun Won
Daejeon 34122 (KR)**
• **AHN, Dong Joon
Daejeon 34122 (KR)**

(74) Representative: **Hoffmann Eitle
Patent- und Rechtsanwälte PartmbB
Arabellastraße 30
81925 München (DE)**

(54) **CATHODE MATERIAL FOR LITHIUM SECONDARY BATTERY, CATHODE COMPRISING SAME, AND LITHIUM SECONDARY BATTERY**

(57) The present invention relates to a positive electrode material, which includes a first lithium transition metal oxide and a second lithium transition metal oxide having a smaller average particle diameter ($D_{50}$) than the first lithium transition metal oxide, wherein particle strength of the first lithium transition metal oxide is 100 MPa or more, and particle strength of the second lithium transition metal oxide is twice or more than the particle strength of the first lithium transition metal oxide, and a positive electrode and a lithium secondary battery which include the same.

[FIG. 1]

EP 4 447 158 A1

**Description**

**TECHNICAL FIELD**

This application claims priority from Korean Patent Application No. 10-2022-0077414, filed on June 24, 2022, the disclosure of which is incorporated by reference herein.

The present invention relates to a positive electrode material for a lithium secondary battery, and a positive electrode and a lithium secondary battery which include the same.

**BACKGROUND ART**

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

Lithium transition metal composite oxides have been used as a positive electrode active material of the lithium secondary battery, and, among these oxides, a lithium cobalt composite metal oxide, such as $LiCoO_2$, having a high operating voltage and excellent capacity characteristics has been mainly used. However, the $LiCoO_2$ has poor thermal properties due to an unstable crystal structure caused by delithiation. Also, since the $LiCoO_2$ is expensive, there is a limitation in using a large amount of the $LiCoO_2$ as a power source for applications such as electric vehicles.

Lithium manganese composite metal oxides ($LiMnO_2$ or $LiMn_2O_4$), lithium iron phosphate compounds ($LiFePO_4$, etc.), or lithium nickel composite metal oxides ($LiNiO_2$, etc.) have been developed as materials for replacing the $LiCoO_2$. Among these materials, research and development of the lithium nickel composite metal oxides, in which a large capacity battery may be easily achieved due to a high reversible capacity of about 200 mAh/g, have been more actively conducted. However, the $LiNiO_2$ has limitations in that the $LiNiO_2$ has poorer thermal stability than the $LiCoO_2$ and, when an internal short circuit occurs in a charged state due to an external pressure, the positive electrode active material itself is decomposed to cause rupture and ignition of the battery. Accordingly, as a method to improve low thermal stability while maintaining the excellent reversible capacity of the $LiNiO_2$, a lithium transition metal oxide, in which a portion of nickel (Ni) is substituted with cobalt (Co), manganese (Mn), or aluminum (Al), has been developed.

With respect to a lithium ion battery using the lithium transition metal oxide, particularly, a lithium transition metal oxide containing a high content of nickel (Ni-rich) as a positive electrode active material, battery capacity, high output, and gas generation at high temperatures are not only affected by chemical properties such as a composition of the positive electrode active material, a content of impurities, and a content of lithium by-product present on a surface thereof, but are also affected by physical properties such as size, surface area, density, and shape of positive electrode active material particles.

In general, in order to maximize volumetric energy density of a battery, a method has been used in which the volumetric energy density of the battery is improved by using a mixture of a positive electrode active material having a large particle diameter and a positive electrode active material having a small particle diameter to fill voids between large-diameter positive electrode active material particles with the small-diameter positive electrode active material, and a method of rolling a positive electrode active material layer using a roll press has been used to prepare the positive electrode active material layer having a more dense structure. In this case, since excessive cracks occur in the particles having relatively weak particle strength during rolling due to a difference in particle strength between the positive electrode active material having a large particle diameter and the positive electrode active material having a small particle diameter, the particles not only lose their original shape, but a contact area with an electrolyte solution is also excessively increased, and thus, there has been a problem in that life characteristics are degraded when the positive electrode active material layer is used in the battery.

Therefore, there is a need to develop a positive electrode material which may improve volumetric energy density and may improve life characteristics by suppressing particle cracking during rolling for preparing a positive electrode.

[Prior Art Documents]

[Patent Document]

(Patent Document 1) KR 2021-0117212 A

# DISCLOSURE OF THE INVENTION

## TECHNICAL PROBLEM

An aspect of the present invention provides a positive electrode material which may suppress particle cracking during rolling.

Another aspect of the present invention provides a positive electrode in which cracking of active material particles is mitigated by including the above positive electrode material.

## TECHNICAL SOLUTION

In order to solve the above-described tasks, the present invention provides a positive electrode material.

(1) The present invention provides a positive electrode material which includes a first lithium transition metal oxide and a second lithium transition metal oxide having a smaller average particle diameter ($D_{50}$) than the first lithium transition metal oxide, wherein particle strength of the first lithium transition metal oxide is 100 MPa or more, and particle strength of the second lithium transition metal oxide is twice or more than the particle strength of the first lithium transition metal oxide, wherein, after placing a sample particle on glass, the particle strength is a value obtained by measuring a force until the particle breaks and a tip touches the glass on which the sample has been placed while applying a pressure of 100 mN with the tip.

(2) The present invention provides the positive electrode material of (1) above, wherein the positive electrode material has a bi-modal particle size distribution.

(3) The present invention provides the positive electrode material of (1) or (2) above, wherein the average particle diameter ($D_{50}$) of the second lithium transition metal oxide is 50% or less based on an average particle diameter ($D_{50}$) of the first lithium transition metal oxide.

(4) The present invention provides the positive electrode material of any one of (1) to (3) above, wherein the first lithium transition metal oxide and the second lithium transition metal oxide are included in a weight ratio of 1:10 to 1:0.1.

(5) The present invention provides the positive electrode material of any one of (1) to (4) above, wherein the second lithium transition metal oxide has the particle strength that is 2 to 10 times the particle strength of the first lithium transition metal oxide.

(6) The present invention provides the positive electrode material of any one of (1) to (5) above, wherein the first lithium transition metal oxide has an average particle diameter ($D_{50}$) of 6 um to 25 $\mu$m.

(7) The present invention provides the positive electrode material of any one of (1) to (6) above, wherein the particle strength of the first lithium transition metal oxide is in a range of 100 MPa to 300 MPa.

(8) The present invention provides the positive electrode material of any one of (1) to (7) above, wherein the second lithium transition metal oxide has the average particle diameter ($D_{50}$) of 1 um to 12 $\mu$m.

(9) The present invention provides the positive electrode material of any one of (1) to (8) above, wherein the second lithium transition metal oxide has the particle strength of 200 MPa to 1,000 MPa.

(10) The present invention provides the positive electrode material of any one of (1) to (9) above, wherein the first lithium transition metal oxide and the second lithium transition metal oxide each independently has a composition represented by Formula 1.

[Formula 1] $\qquad$ $Li_{1+a}Ni_xCo_yM^1_zM^2_wO_2$

wherein, in Formula 1,

$-0.05 \leq a \leq 0.30$, $0.6 \leq x < 1$, $0 < y < 0.4$, $0 < z < 0.4$, and $0 \leq w \leq 0.3$,

$M^1$ is at least one selected from manganese (Mn) and aluminum (Al), and

$M^2$ is at least one selected from the group consisting of tungsten (W), molybdenum (Mo), barium (Ba), cerium (Ce), fluorine (F), chromium (Cr), zirconium (Zr), vanadium (V), iron (Fe), titanium (Ti), zinc (Zn), silicon (Si), gallium (Ga), tin (Sn), phosphorus (P), sulfur (S), strontium (Sr), magnesium (Mg), tantalum (Ta), boron (B), lanthanum (La), hafnium (Hf), niobium (Nb), and yttrium (Y).

Also, in order to solve another task, the present invention provides a positive electrode including the positive electrode material.

(11) The present invention provides a positive electrode for a lithium secondary battery which includes a positive electrode active material layer including the positive electrode material of any one of (1) to (10) above, wherein the positive electrode active material layer has a porosity (vol%) of 10% to 30%, and the positive electrode includes particles having a particle diameter of less than 1 um in an amount of 50% or less based on the total number of particles in the positive electrode active material layer during measurement of particle size distribution (PSD).

Furthermore, in order to solve another task, the present invention provides a lithium secondary battery including the positive electrode.

(12) The present invention provides a lithium secondary battery including the positive electrode of (11) above.

## ADVANTAGEOUS EFFECTS

Since a positive electrode material according to the present invention includes both a large-particle-diameter lithium transition metal oxide having a particle strength of a specific value or more and a small-particle-diameter lithium transition metal oxide having a particle strength that is twice or more than the particle strength of the large-particle-diameter lithium transition metal oxide, it may effectively suppress a cracking phenomenon of the lithium transition metal oxide particles during rolling for preparing a positive electrode, and, accordingly, in a case in which the positive electrode material according to the present invention is used, the occurrence of a side reaction with an electrolyte solution caused by lithium transition metal oxide particle cracking may be minimized and excellent capacity characteristics and life characteristics may be achieved.

## BRIEF DESCRIPTION OF THE DRAWINGS

FIGS. 1 to 9 are graphs illustrating results of measuring particle size distributions (PSD) of positive electrodes, which are prepared by using positive electrode materials prepared in Examples 1 to 9, by number, respectively.
FIGS. 10 to 13 are graphs illustrating results of measuring particle size distributions (PSD) of positive electrodes, which are prepared by using positive electrode materials prepared in Comparative Examples 1 to 4, by number, respectively.

## MODE FOR CARRYING OUT THE INVENTION

Hereinafter, the present invention will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present specification, the expression "average particle diameter ($D_{50}$)" may be defined as a particle diameter at a cumulative volume of 50% in a particle size distribution curve. The average particle diameter ($D_{50}$), for example, may be measured by using a laser diffraction method. The laser diffraction method may generally measure a particle diameter ranging from a few nm to a few mm and may obtain highly repeatable and high-resolution results.

In this specification, after collecting a sample of lithium transition metal oxide particles and placing the collected sample on glass, particle strength (MPa) is a value obtained by measuring a force until the particle breaks and a tip touches the glass on which the sample has been placed while applying a constant pressure (100 mN) to the sample with the tip.

### Positive Electrode Material

A positive electrode material of the present invention includes a first lithium transition metal oxide and a second lithium transition metal oxide having a smaller average particle diameter ($D_{50}$) than the first lithium transition metal oxide, wherein particle strength of the large-particle-diameter first lithium transition metal oxide having a relatively large average particle diameter is 100 MPa or more and particle strength of the small-particle-diameter second lithium transition metal oxide having a relatively small average particle diameter is twice or more than the particle strength of the first lithium transition metal oxide. Herein, after placing a sample particle on glass, the particle strength is a value obtained by measuring a force until the particle breaks and a tip touches the glass on which the sample has been placed while applying a pressure of 100 mN with the tip. The positive electrode material of the present invention may suppress particle cracking while having high volumetric energy density, and, accordingly, may exhibit excellent capacity characteristics and long life characteristics when it is used in a battery.

The positive electrode material according to the present invention includes the first lithium transition metal oxide and the second lithium transition metal oxide having a smaller average particle diameter ($D_{50}$) than the first lithium transition metal oxide which have different average particle diameters ($D_{50}$) from each other, wherein it may exhibit a bimodal particle size distribution.

For example, the first lithium transition metal oxide is a particle having a relatively large average particle diameter, and the second lithium transition metal oxide is a particle having a relatively small average particle diameter, wherein, specifically, the average particle diameter ($D_{50}$) of the second lithium transition metal oxide may be 50% or less, may specifically be in a range of 10% to 50%, 10% to 45%, 10% to 42%, 12% to 50%, 12% to 45%, 12% to 42%, 15% to 50%, 15% to 45%, or 15% to 42%, and may more specifically be in a range of 20% to 40% based on the average particle diameter ($D_{50}$) of the first lithium transition metal oxide. In a case in which the average particle diameter ($D_{50}$) of the second lithium transition metal oxide satisfies the above range based on the average particle diameter ($D_{50}$) of the first lithium transition metal oxide, particle cracking of the positive electrode material including them may be effectively reduced.

The positive electrode material according to the present invention may include the first lithium transition metal oxide and the second lithium transition metal oxide in a weight ratio of 1:10 to 1:0.1, particularly in a weight ratio of 1:4 to 1:0.1, 1:2.4 to 1:0.1, or 1:1.9 to 1:0.17, and more particularly in a weight ratio of 1:1.5 to 1:0.25. In a case in which the first lithium transition metal oxide and the second lithium transition metal oxide are included in the above weight ratio, the particle cracking of the positive electrode material including them may be effectively reduced, and an effect of improving tap density of the positive electrode material may be obtained.

The second lithium transition metal oxide exhibits a particle strength that is twice or more than the particle strength of the first lithium transition metal oxide, and may specifically exhibit a particle strength that is 2 to 10 times or 2 to 8 times, more specifically, 2.2 to 6 times the particle strength of the first lithium transition metal oxide. In a case in which the second lithium transition metal oxide exhibits the particle strength within the above range based on the particle strength of the first lithium transition metal oxide, the particle cracking of the positive electrode material including them may be effectively reduced.

Since the positive electrode material according to an example of the present invention includes the first lithium transition metal oxide and the second lithium transition metal oxide together, wherein, since the first lithium transition metal oxide and the second lithium transition metal oxide satisfy the above range of the particle diameter ratio and satisfy the particle strength ratio while satisfying the weight ratio, the particle cracking of the positive electrode material including them may be effectively reduced, and, accordingly, excellent life characteristics may be exhibited.

The first lithium transition metal oxide may have an average particle diameter ($D_{50}$) of 6 um to 25 um, particularly 9 um to 22 $\mu$m, and more particularly 9 um to 20 um, and the second lithium transition metal oxide may have an average particle diameter ($D_{50}$) of 1 um to 12 um, particularly 2 um to 9 $\mu$m, and more particularly 2 um to 6 $\mu$m.

In a case in which the average particle diameters ($D_{50}$) of the first lithium transition metal oxide and the second lithium transition metal oxide satisfy the above ranges, the particle cracking of the positive electrode material including them is mitigated, and, since the second lithium transition metal oxide particles are filled between the first lithium transition metal oxide particles, tap density of the positive electrode material including the same may be improved. Since the higher the tap density is the higher the packing density of the electrode is, a slurry containing the positive electrode material having the above tap density may be thinly applied to a surface of a positive electrode collector when the electrode is prepared by using the positive electrode material, and thus, a thickness of the electrode after coating is improved to be thin and a pressure required to reach the thickness of the electrode to match rolling density in a process of rolling the electrode may be reduced to improve cracking of the positive electrode material due to the rolling. In addition, the capacity characteristics may be further improved as the volumetric energy density is improved.

The first lithium transition metal oxide may have a particle strength of 100 MPa or more, particularly 100 MPa to 300 MPa or 100 MPa to 280 MPa, and more particularly 120 MPa to 220 MPa.

Also, while the particle strength of the second lithium transition metal oxide is twice or more than the particle strength of the first lithium transition metal oxide, the second lithium transition metal oxide may have a particle strength of 200 MPa to 1,000 MPa, particularly 300 MPa to 950 MPa, 400 MPa to 950 MPa, or 500 MPa to 950 MPa, and more particularly 650 MPa to 900 MPa.

The particle strength may be expressed by Equation 1 below.

$$[Equation\ 1]$$

$$\text{Particle strength} = \kappa \frac{P}{\pi D^2}$$

In Equation 1, $\kappa$ is a particle strength constant, D is a particle diameter, and P is a particle breaking pressure.

The particle strength constant κ may be expressed by Equation 2 below.

$$[\text{Equation 2}]$$

$$\kappa = \frac{\sqrt{3}}{\sqrt{2}} + (1 - 2\mu)\frac{2}{\sqrt{2}+1}$$

In Equation 2, $\mu$ is a Poisson's ratio, and, in an embodiment of the present invention, Poisson's ratios of the first lithium transition metal oxide and the second lithium transition metal oxide are 0.095.

In a case in which the particle strength of the first lithium transition metal oxide satisfies the above range, particle cracking during rolling of the large-particle-diameter first lithium transition metal oxide may be reduced. In a case in which the particle strength of the first lithium transition metal oxide is less than 100 MPa, the large-diameter first lithium transition metal oxide particles may be easily broken during rolling, and, accordingly, this may cause a problem in that a specific surface area capable of reacting with an electrolyte solution is increased.

Also, in a case in which the particle strength of the second lithium transition metal oxide satisfies the above range while being twice or more than the particle strength of the first lithium transition metal oxide, the particle cracking of the positive electrode material including the same may be effectively mitigated. In a case in which the particle strength of the second lithium transition metal oxide is less than twice the particle strength of the first lithium transition metal oxide, the particle cracking of the positive electrode material including the same may be relatively increased.

In a case in which the particle strengths of the first lithium transition metal oxide and the second lithium transition metal oxide respectively satisfy the above ranges, particle cracking during rolling for preparing a positive electrode may be mitigated, and, accordingly, excellent rolling density may be achieved and high-temperature life characteristics of the battery may be optimized.

Since the particle strength of the lithium transition metal oxide varies depending on a composition and characteristics of a precursor for a positive electrode active material (transition metal hydroxide, transition metal oxyhydroxide, etc.), as a raw material, and sintering conditions, a lithium transition metal oxide having desired particle strength may be prepared by appropriately adjusting the sintering conditions (temperature and time) according to the composition and/or characteristics (surface area, density, shape, etc.) of the precursor for a positive electrode active material.

The first lithium transition metal oxide and the second lithium transition metal oxide may each independently be a lithium transition metal oxide in which a molar ratio of nickel among transition metals is 70 mol% or more. Since the nickel-rich lithium transition metal oxide has large capacity per unit volume, excellent capacity characteristics may be achieved when it is used in a battery.

Specifically, the first lithium transition metal oxide and the second lithium transition metal oxide may each independently have a composition represented by Formula 1 below.

[Formula 1]     $Li_{1+a}Ni_xCo_yM^1{}_zM^2{}_wO_2$

In Formula 1, $M^1$ is at least one selected from manganese (Mn) and aluminum (Al), and may specifically include Mn and Al at the same time.

$M^2$ may be at least one selected from the group consisting of tungsten (W), molybdenum (Mo), barium (Ba), cerium (Ce), fluorine (F), chromium (Cr), zirconium (Zr), vanadium (V), iron (Fe), titanium (Ti), zinc (Zn), silicon (Si), gallium (Ga), tin (Sn), phosphorus (P), sulfur (S), strontium (Sr), magnesium (Mg), tantalum (Ta), boron (B), lanthanum (La), hafnium (Hf), niobium (Nb), and yttrium (Y).

In Formula 1, $-0.05 \leq a \leq 0.30$, $0.6 \leq x < 1$, $0 < y < 0.4$, $0 < z < 0.4$, and $0 \leq w \leq 0.3$.

1+a represents a molar ratio of lithium in the lithium transition metal oxide, wherein a may satisfy $-0.05 \leq a \leq 0.3$, preferably, $-0.03 \leq a \leq 0.2$.

x represents a molar ratio of nickel in total transition metals, wherein x may satisfy $0.6 \leq x < 1$, $0.65 \leq x \leq 1$, $0.7 \leq x \leq 1$, $0.7 \leq x \leq 0.99$, $0.75 \leq x \leq 0.99$, $0.8 \leq x \leq 0.99$, $0.85 \leq x \leq 0.99$, $0.85 \leq x \leq 0.98$, or $0.85 \leq x \leq 0.95$. In a case in which the nickel content satisfies the above range, excellent capacity characteristics may be achieved.

y represents a molar ratio of cobalt in the total transition metals, wherein y may satisfy $0 < y < 0.4$, $0 < y < 0.35$, $0 < y < 0.3$, $0 < y < 0.25$, or $0.01 \leq y \leq 0.2$.

z represents a molar ratio of $M^1$ in the total transition metals, wherein z may satisfy $0 < z < 0.4$, $0 < z < 0.35$, $0 < z < 0.3$, $0 < z < 0.25$, $0 < z < 0.2$, $0 < z < 0.15$, or $0.01 \leq z < 0.1$.

w represents a molar ratio of $M^2$ in the total transition metals, wherein w may satisfy $0 \leq w \leq 0.3$, $0 \leq w \leq 0.25$, $0 \leq w \leq 0.2$, $0 \leq w \leq 0.15$, $0 \leq w \leq 0.1$, or $0 \leq w \leq 0.05$.

More specifically, the first lithium transition metal oxide and the second lithium transition metal oxide may each independently have a composition represented by Formula 2 below.

[Formula 2]     $Li_{1+a}Ni_xCo_yMn_{z1}Al_{z2}M^2_wO_2$

In Formula 2, a, x, y, w, and $M^2$ are the same as defined in Formula 1.

That is, $M^2$ may be at least one selected from the group consisting of W, Mo, Ba, Ce, F, Cr, Zr, V, Fe, Ti, Zn, Si, Ga, Sn, P, S, Sr, Mg, Ta, B, La, Hf, Nb, and Y.

1+a represents a molar ratio of lithium in the lithium transition metal oxide, wherein a may satisfy - $0.05 \le a \le 0.3$, preferably, $-0.03 \le a \le 0.2$.

x represents a molar ratio of nickel in total transition metals, wherein x may satisfy $0.6 \le x < 1$, $0.65 \le x < 1$, $0.7 \le x < 1$, $0.7 \le x \le 0.99$, $0.75 \le x \le 0.99$, $0.8 \le x \le 0.99$, $0.85 \le x \le 0.99$, $0.85 \le x \le 0.98$, or $0.85 \le x \le 0.95$. In a case in which the nickel content satisfies the above range, excellent capacity characteristics may be achieved.

y represents a molar ratio of cobalt in the total transition metals, wherein y may satisfy $0 < y < 0.4$, $0 < y < 0.35$, $0 < y < 0.3$, $0 < y < 0.25$, or $0.01 \le y \le 0.2$.

w represents a molar ratio of $M^2$ in the total transition metals, wherein w may satisfy $0 \le w \le 0.3$, $0 \le w \le 0.25$, $0 \le w \le 0.2$, $0 \le w \le 0.15$, $0 \le w \le 0.1$, or $0 \le w \le 0.05$.

z1 represents a molar ratio of Mn in the transition metals, wherein z1 may satisfy $0 < z1 < 0.4$, $0 < z1 < 0.35$, $0 < z1 < 0.3$, $0 < z1 < 0.25$, $0 < z1 < 0.2$, $0 < z1 < 0.15$, or $0 < z1 < 0.1$.

z2 represents a molar ratio of Al in the transition metals, wherein z2 may satisfy $0 < z2 < 0.4$, $0 < z2 < 0.35$, $0 < z2 < 0.3$, $0 < z2 < 0.25$, $0 < z2 < 0.2$, $0 < z2 < 0.15$, or $0 < z2 < 0.1$.

Compositions of the first lithium transition metal oxide and the second lithium transition metal oxide may be the same or different from each other. For example, the first lithium transition metal oxide may be a lithium transition metal oxide having a molar ratio of nickel among the transition metals of 60 mol% or more, and the second lithium transition metal oxide may be a lithium transition metal oxide having a molar ratio of nickel among the transition metals of 70 mol% to 99 mol%.

The first lithium transition metal oxide and the second lithium transition metal oxide may further include a coating layer including at least one element (hereinafter, referred to as a 'coating element') selected from the group consisting of Al, Ti, W, B, F, P, Mg, nickel (Ni), cobalt (Co), Mn, Fe, Ga, Ba, Ce, Sn, Ta, La, Hf, Cr, V, copper (Cu), calcium (Ca), Zn, Zr, Nb, Mo, Sr, antimony (Sb), bismuth (Bi), Si, Y, and S on a surface of the lithium transition metal oxide, if necessary. In a case in which the coating layer as described above is included, since a contact between the lithium transition metal oxide and the electrolyte solution is blocked, gas generation due to a side reaction with the electrolyte solution and dissolution of the transition metal may be effectively suppressed.

The coating layer may be formed through a method of mixing the lithium transition metal oxide and a raw material including the coating element and then heat-treating the mixture at a temperature of 200°C to 800°C.

**Positive Electrode**

Also, the present invention provides a positive electrode for a lithium secondary battery which includes a positive electrode active material layer including the above positive electrode material. Specifically, the positive electrode includes a positive electrode collector and a positive electrode active material layer which is disposed on at least one surface of the positive electrode collector and includes the positive electrode material. The positive electrode active material layer may have a porosity of 10 vol% to 30 vol%, particularly 15 vol% to 30 vol%, and more particularly 18 vol% to 27 vol%.

When the positive electrode active material layer has the above porosity, the positive electrode may include particles having a particle diameter of less than 1 um in an amount of 50% or less based on the total number of particles in the positive electrode active material layer during the measurement of particle size distribution (PSD). The positive electrode may specifically include the particles having a particle diameter of less than 1 um in an amount of 0.01% to 50%, 0.05% to 30%, 0.1% to 28%, 0.05% to 27.5%, 0.1% to 27.5%, 0.05% to 15%, or 0.1% to 15% based on the total number of positive electrode active material particles. Since the particle cracking of the positive electrode material is mitigated, the positive electrode may include only a small amount of fine powder having a particle diameter of less than 1 um within the above range even in a case in which the positive electrode active material layer is rolled to have porosity within the above range.

After the positive electrode active material layer including the positive electrode material is formed and then rolled to have the porosity of 10 vol% to 30 vol%, particularly 15 vol% to 30 vol%, and more particularly 18 vol% to 24 vol%, the number of particles having a particle diameter of less than 1 um may be obtained by measuring the number of particles located in the positive electrode active material layer when the positive electrode active material layer is heat-treated for 2 hours in an air atmosphere at a temperature of 500°C. The number of particles having a particle diameter of less than 1 um may be a ratio of the numbers when the total number of positive electrode active material particles included in the positive electrode active material layer is defined as 100%, and may specifically be obtained by measuring PSD using 'MICROTRAC S3500' by MICROTRAC MRB, 'CILAS920, France' by CILAS, or 'Mastersizer2000, USA' by MALVERN Panalytical Ltd., and then dividing an area of the particles having a particle diameter of less than 1 um by a total area in a PSD graph.

The positive electrode collector is not particularly limited as long as it has conductivity without causing adverse chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 um to 500 $\mu$m, and microscopic irregularities may be formed on the surface of the collector to improve the adhesion of the positive electrode active material. The positive electrode collector, for example, may be used in various shapes such as that of a film, a sheet, a foil, a net, a porous body, a foam body, a non-woven fabric body, and the like.

The positive electrode active material layer may include a conductive agent and a binder in addition to the above-described positive electrode material according to the present invention.

The positive electrode material may be included in an amount of 80 wt% to 99 wt%, more specifically, 85 wt% to 98 wt% based on a total weight of the positive electrode active material layer. When the positive electrode material is included in an amount within the above range, excellent capacity characteristics may be obtained.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt% based on the total weight of the positive electrode active material layer.

The binder improves the adhesion between the positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be prepared according to a typical method of preparing a positive electrode except that the positive electrode material according to the present invention is used. Specifically, a composition for forming a positive electrode active material layer, which is prepared by dissolving or dispersing the above-described positive electrode material as well as optionally the binder, the conductive agent, and an additive, if necessary, in a solvent, is coated on the positive electrode collector, and the positive electrode may then be prepared by drying and rolling the coated positive electrode collector. In this case, types and amounts of the positive electrode material, the binder, and the conductive agent are the same as those previously described.

The solvent may be a solvent normally used in the art. The solvent may include dimethyl sulfoxide (DMSO), isopropyl alcohol, N-methylpyrrolidone (NMP), acetone, or water, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the preparation of the positive electrode.

Also, as another method, the positive electrode may be prepared by casting the composition for forming a positive electrode active material layer on a separate support and then laminating a film separated from the support on the positive electrode collector.

**Lithium Secondary Battery**

Furthermore, in the present invention, an electrochemical device including the positive electrode may be prepared. The electrochemical device may specifically be a battery or a capacitor, and, for example, may be a lithium secondary battery.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 um to 500 $\mu$m, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as $SiOp(0<\beta<2)$, $SnO_2$, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 parts by weight to 99 parts by weight based on 100 parts by weight of a total weight of the negative electrode active material layer.

The binder is a component that assists in the binding between the conductive agent, the active material, and the current collector, wherein the binder may typically be added in an amount of 0.1 part by weight to 10 parts by weight based on 100 parts by weight of the total weight of the negative electrode active material layer. Examples of the binder may be polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated-EPDM, a styrene-butadiene rubber, a nitrile-butadiene rubber, a fluoro rubber, and various copolymers thereof.

The conductive agent is a component for further improving conductivity of the negative electrode active material, wherein the conductive agent may be added in an amount of 10 parts by weight or less, preferably, 5 parts by weight or less based on 100 parts by weight of the total weight of the negative electrode active material layer. The conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

For example, the negative electrode active material layer may be prepared by coating a negative electrode material mixture, which is prepared by dissolving or dispersing optionally the binder and the conductive agent as well as the negative electrode active material in a solvent, on the negative electrode collector and drying the coated negative electrode collector, or may be prepared by casting the negative electrode material mixture on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 part by weight to 5 parts by weight based on 100 parts by weight of a total weight of the electrolyte.

As described above, since the lithium secondary battery including the positive electrode material according to the present invention stably exhibits excellent discharge capacity, output characteristics, and life characteristics, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

A shape of the lithium secondary battery of the present invention is not particularly limited, but a cylindrical type using a can, a prismatic type, a pouch type, or a coin type may be used.

The lithium secondary battery according to the present invention may not only be used in a battery cell that is used as a power source of a small device, but may also be used as a unit cell in a medium and large sized battery module including a plurality of battery cells.

Hereinafter, the present invention will be described in detail, according to specific examples. The invention may, however, be embodied in many different forms and should not be construed as being limited to the embodiments set forth herein. Rather, these example embodiments are provided so that this description will be thorough and complete, and will fully convey the scope of the present invention to those skilled in the art.

**Examples and Comparative Examples**

**Preparation Example 1 - Preparation of First Lithium Transition Metal Oxide A**

NiSO$_4$, CoSO$_4$, and MnSO$_4$ were dissolved in water in amounts such that a molar ratio of nickel:cobalt:manganese was 88:5:7 to prepare a transition metal-containing solution with a concentration of 2 M.

A container containing the transition metal-containing solution, an additional 25 wt% NaOH solution, and a 15 wt% NH$_4$OH aqueous solution were respectively connected to a 200 L batch-type reactor set at 55°C.

Subsequently, after deionized water was put into the batch-type reactor, dissolved oxygen in the water was removed by purging with nitrogen gas to create a non-oxidizing atmosphere in the reactor. Thereafter, after NaOH was added, a pH in the co-precipitation reactor was maintained at 11.7 while the mixture was stirred at a stirring speed of 250 rpm.

Thereafter, the transition metal-containing solution was added to the co-precipitation reactor at a rate of 250 mL/hr, an NH$_4$OH aqueous solution was added at a rate of 40 mL/hr, and an aqueous NaOH solution was added at a rate at which a pH of a reaction solution may be maintained at 11.7, and, after 6 hours of reaction, stirring was stopped and a supernatant was removed to concentrate the reaction solution. This process was repeated 4 to 5 times to grow particles until an average particle diameter (D$_{50}$) reached about 10 μm.

The particles thus prepared were filtered with a filter press, and then dried at 130°C for 24 hours to obtain a precursor for a first lithium transition metal oxide with a composition of Ni$_{0.88}$Co$_{0.05}$Mn$_{0.07}$(OH)$_2$.

Subsequently, LiOH·H$_2$O was added such that an equivalence ratio of LiOH·H$_2$O to the precursor for a first lithium transition metal oxide was 1.06, and Al(OH)$_3$ was mixed, sintered at 640°C for 5 hours in an oxygen atmosphere, and then re-sintered at 775°C for 5 hours to prepare a lithium transition metal oxide having a molar ratio of nickel:cobalt:manganese:aluminum of 86:5:7:2.

The lithium transition metal oxide was stirred with distilled water in a weight ratio of 1:1.1 and washed with the distilled water.

H$_3$BO$_3$ was mixed with the lithium transition metal oxide after the completion of the washing and a heat treatment was performed at 295°C for 5 hours to prepare a B-coated first lithium transition metal oxide.

After 0.05 g of the prepared first lithium transition metal oxide was added to 20 mL of distilled water along with a 10% aqueous solution (5 mL) of sodium metahexaphosphate as a dispersant, a sonication treatment was performed for 1 minute and D$_{50}$ was then measured by using a laser diffraction method using a laser diffraction particle size measurement instrument (Microtrac MT 3000).

Also, after the prepared first lithium transition metal oxide was scattered on a glass substrate to find a first lithium transition metal oxide particle having a particle diameter corresponding to an average particle diameter (D$_{50}$) range under a microscope (Anton Paar GmbH, step 300), particle strength (MPa) was obtained through an F-distance graph when the particle was broken by applying a constant force with a tip.

**Preparation Example 2 - Preparation of First Lithium Transition Metal Oxide B**

A B-coated first lithium transition metal oxide was prepared in the same manner as in Preparation Example 1 except that the re-sintering temperature was changed from 775°C to 790°C, and an average particle diameter (D$_{50}$) and particle strength of particles were measured.

**Preparation Example 3 - Preparation of First Lithium Transition Metal Oxide C**

A B-coated first lithium transition metal oxide was prepared in the same manner as in Preparation Example 1 except that particles were grown in a co-precipitation reactor until an average particle diameter (D$_{50}$) of the particles was about 13.5 um instead of about 10 μm, and an average particle diameter (D$_{50}$) and particle strength of particles were measured.

**Preparation Example 4 - Preparation of First Lithium Transition Metal Oxide D**

A B-coated first lithium transition metal oxide was prepared in the same manner as in Preparation Example 1 except that particles were grown in a co-precipitation reactor until an average particle diameter (D$_{50}$) of the particles was about 15.5 um instead of about 10 μm, and an average particle diameter (D$_{50}$) and particle strength of particles were measured.

**Preparation Example 5 - Preparation of First Lithium Transition Metal Oxide E**

A B-coated first lithium transition metal oxide was prepared in the same manner as in Preparation Example 1 except that the re-sintering temperature was changed from 775°C to 770°C, and an average particle diameter ($D_{50}$) and particle strength of particles were measured.

**Preparation Example 6 - Preparation of First Lithium Transition Metal Oxide F**

A B-coated first lithium transition metal oxide was prepared in the same manner as in Preparation Example 1 except that the re-sintering temperature was changed from 775°C to 760°C, and an average particle diameter ($D_{50}$) and particle strength of particles were measured.

**Preparation Example 7 - Preparation of Second Lithium Transition Metal Oxide a**

A precursor for a second lithium transition metal oxide with a composition of $Ni_{0.83}Co_{0.05}Mn_{0.12}(OH)_2$ was obtained in the same manner as in Preparation Example 1 except that, after $NiSO_4$, $CoSO_4$, and $MnSO_4$ were dissolved in water in amounts such that a molar ratio of nickel:cobalt:manganese was 83:5:12 to prepare a transition metal-containing solution with a concentration of 2 M, particles were grown until an average particle diameter ($D_{50}$) was about 4 um by performing a concentration process 2 to 3 times during the preparation of the precursor.

Subsequently, $LiOH·H_2O$ was added such that an equivalence ratio of $LiOH·H_2O$ to the precursor for a second lithium transition metal oxide was 0.97, and $Al(OH)_3$ was mixed and sintered at 860°C for 12 hours in an oxygen atmosphere to prepare a lithium transition metal oxide having a molar ratio of nickel:cobalt:manganese:aluminum of 82.5:5:12:0.5.

$LiOH·H_2O$ was added such that an equivalence ratio of $LiOH·H_2O$ to the lithium transition metal oxide was 0.03, and sintering was performed at 780°C for 10 hours in an oxygen atmosphere to prepare a second lithium transition metal oxide having a molar ratio of nickel:cobalt:manganese:aluminum of 82.5:5:12:0.5.

An average particle diameter ($D_{50}$) and particle strength of the above-prepared second lithium transition metal oxide were measured in the same manner as in Preparation Example 1.

**Preparation Example 8 - Preparation of Second Lithium Transition Metal Oxide b**

A second lithium transition metal oxide was prepared in the same manner as in Preparation Example 7 except that, in Preparation Example 7, after $LiOH·H_2O$ was added such that an equivalence ratio of $LiOH·H_2O$ to the second lithium transition metal oxide precursor was 0.97 and $Al(OH)_3$ was mixed, sintering was performed for 12 hours while temperature during the sintering in an oxygen atmosphere was set to 880°C instead of 860°C.

An average particle diameter ($D_{50}$) and particle strength of the above-prepared second lithium transition metal oxide were measured in the same manner as in Preparation Example 1.

**Preparation Example 9 - Preparation of Second Lithium Transition Metal Oxide c**

A second lithium transition metal oxide precursor with a composition of $Ni_{0.83}Co_{0.05}Mn_{0.12}(OH)_2$ was obtained in the same manner as in Preparation Example 1 except that, after $NiSO_4$, $CoSO_4$, and $MnSO_4$ were dissolved in water in amounts such that a molar ratio of nickel:cobalt:manganese was 83:5:12 to prepare a transition metal-containing solution with a concentration of 2 M, particles were grown until an average particle diameter ($D_{50}$) was about 5 um by performing a concentration process 2 to 3 times during the preparation of the precursor.

Subsequently, $LiOH·H_2O$ was added such that an equivalence ratio of $LiOH·H_2O$ to the second lithium transition metal oxide precursor was 1.05, and $Al(OH)_3$ was mixed, sintered at 640°C for 5 hours in an oxygen atmosphere, and then re-sintered at 820°C for 5 hours to prepare a lithium transition metal oxide having a molar ratio of nickel:cobalt:manganese:aluminum of 81:5:12:2. The lithium transition metal oxide was stirred with distilled water in a weight ratio of 1:1.1 and washed with the distilled water.

$H_3BO_3$ was mixed with the lithium transition metal oxide after the completion of the washing and a heat treatment was performed at 295°C for 5 hours to prepare a B-coated second lithium transition metal oxide.

An average particle diameter ($D_{50}$) and particle strength of the above-prepared second lithium transition metal oxide were measured in the same manner as in Preparation Example 1.

**Preparation Example 10 - Preparation of Second Lithium Transition Metal Oxide d**

A B-coated second lithium transition metal oxide was prepared in the same manner as in Preparation Example 9 except that the re-sintering temperature was changed from 820°C to 830°C, and an average particle diameter ($D_{50}$) and particle strength of particles were measured.

**Preparation Example 11 - Preparation of Second Lithium Transition Metal Oxide e**

A second lithium transition metal oxide precursor with a composition of $Ni_{0.83}Co_{0.05}Mn0_{0.12}(OH)_2$ was obtained in the same manner as in Preparation Example 1 except that, after $NiSO_4$, $CoSO_4$, and $MnSO_4$ were dissolved in water in amounts such that a molar ratio of nickel:cobalt:manganese was 83:5:12 to prepare a transition metal-containing solution with a concentration of 2 M, particles were grown until an average particle diameter ($D_{50}$) was about 5.5 um by performing a concentration process 2 to 3 times during the preparation of the precursor.

Subsequently, $LiOH \cdot H_2O$ was added such that an equivalence ratio of $LiOH \cdot H_2O$ to the second lithium transition metal oxide precursor was 1.05, and $Al(OH)_3$ was mixed, sintered at 640°C for 5 hours in an oxygen atmosphere, and then re-sintered at 810°C for 5 hours to prepare a lithium transition metal oxide having a molar ratio of nickel:cobalt:manganese:aluminum of 81:5:12:2. The lithium transition metal oxide was stirred with distilled water in a weight ratio of 1:1.1 and washed with the distilled water.

$H_3BO_3$ was mixed with the lithium transition metal oxide after the completion of the washing and a heat treatment was performed at 295°C for 5 hours to prepare a B-coated second lithium transition metal oxide.

An average particle diameter ($D_{50}$) and particle strength of the above-prepared second lithium transition metal oxide were measured in the same manner as in Preparation Example 1.

**Preparation Example 12 - Preparation of Second Lithium Transition Metal Oxide f**

A B-coated second lithium transition metal oxide was prepared in the same manner as in Preparation Example 9 except that the re-sintering temperature was changed from 810°C to 805°C, and an average particle diameter ($D_{50}$) and particle strength of particles were measured.

**Examples 1 to 9 and Comparative Examples 1 to 4 - Positive Electrode Material Preparation**

As shown in Table 1 below, positive electrode materials were prepared by mixing the above-prepared first lithium transition metal oxides and second lithium transition metal oxides.

[Table 1]

| | First lithium transition metal oxide | | | Second lithium transition metal oxide | | | Mixing ratio |
| --- | --- | --- | --- | --- | --- | --- | --- |
| | Category | Particle strength (MPa) | Average particle diameter (μm) | Category | Particle strength (MPa) | Average particle diameter (μm) | (weight ratio) |
| Example 1 | Preparation Example 1 | 150 | 10.0 | Preparation Example 7 | 640 | 3.5 | 8:2 |
| Example 2 | Preparation Example 1 | 150 | 10.0 | Preparation Example 8 | 860 | 3.5 | 8:2 |
| Example 3 | Preparation Example 2 | 198 | 10.0 | Preparation Example 8 | 860 | 3.5 | 8:2 |
| Example 4 | Preparation Example 3 | 164 | 13.0 | Preparation Example 8 | 860 | 3.5 | 8:2 |

(continued)

| | First lithium transition metal oxide | | | Second lithium transition metal oxide | | | Mixing ratio |
|---|---|---|---|---|---|---|---|
| | Category | Particle strength (MPa) | Average particle diameter (μm) | Category | Particle strength (MPa) | Average particle diameter (μm) | (weight ratio) |
| Example 5 | Preparation Example 4 | 166 | 15.0 | Preparation Example 8 | 860 | 3.5 | 8:2 |
| Example 6 | Preparation Example 4 | 166 | 15.0 | Preparation Example 8 | 860 | 3.5 | 7 : 3 |
| Example 7 | Preparation Example 4 | 166 | 15.0 | Preparation Example 8 | 860 | 3.5 | 6:4 |
| Example 8 | Preparation Example 4 | 166 | 15.0 | Preparation Example 8 | 860 | 3.5 | 5:5 |
| Example 9 | Preparation Example 4 | 166 | 15.0 | Preparation Example 8 | 860 | 3.5 | 4:6 |
| Comparative Example 1 | Preparation Example 1 | 150 | 10.0 | Preparation Example 9 | 188 | 4.5 | 8:2 |
| Comparative Example 2 | Preparation Example 1 | 150 | 10.0 | Preparation Example 10 | 262 | 4.5 | 8:2 |
| Comparative Example 3 | Preparation Example 5 | 147 | 10.0 | Preparation Example 11 | 133 | 5.0 | 8:2 |
| Comparative Example 4 | Preparation Example 6 | 131 | 10.0 | Preparation Example 12 | 126 | 5.0 | 8:2 |

**Preparation of Positive Electrode**

Positive electrodes were prepared by using each of the positive electrode materials prepared in Examples 1 to 9 and Comparative Examples 1 to 4. Specifically, each of the positive electrode materials prepared in Examples 1 to 9 and Comparative Examples 1 to 4, a conductive agent (FX35), and a binder (KF9700 and BM730H were mixed in a weight ratio of 1.35:0.15) were mixed in an N-methyl-2-pyrrolidone (NMP) solvent at a weight ratio of 97.5:1:1.5 to prepare a positive electrode slurry. One surface of an aluminum current collector was coated with the positive electrode slurry, dried at 130°C, and then rolled to have a porosity of 24 vol% to prepare a positive electrode.

**Experimental Example 1**

PSD (Particle Size Distribution) Measurement

After the above-prepared positive electrode was heat-treated for 2 hours in an air atmosphere at a temperature of 500°C and positive electrode active material particles were then collected from the positive electrode, a 10% aqueous solution (5 mL) of sodium metahexaphosphate, as a dispersant, and the positive electrode active material particles were added to 20 mL of deionized water (DI water) and ultrasonically dispersed for 2 minutes. PSD was measured using 'MICROTRAC S3500' by MICROTRAC MRB.

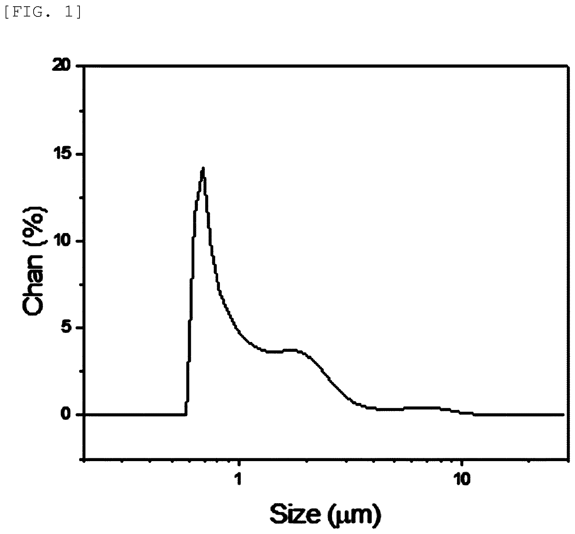

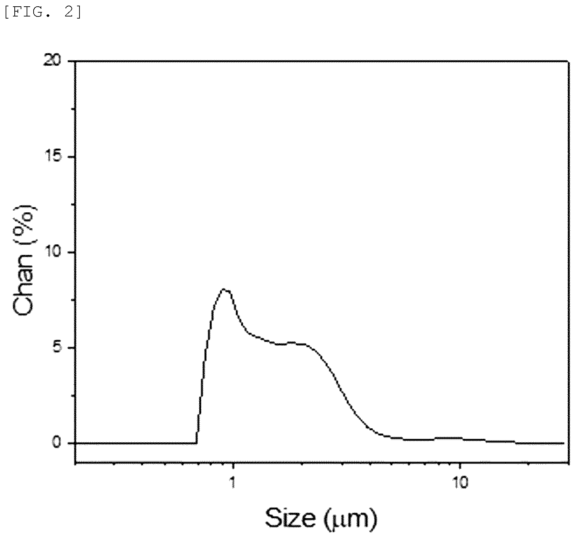

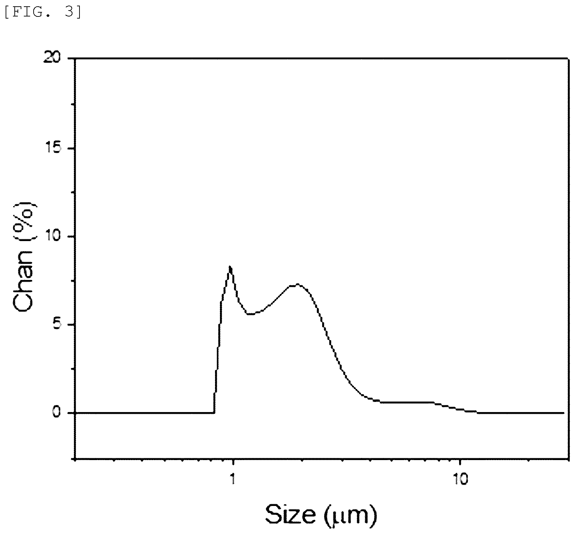

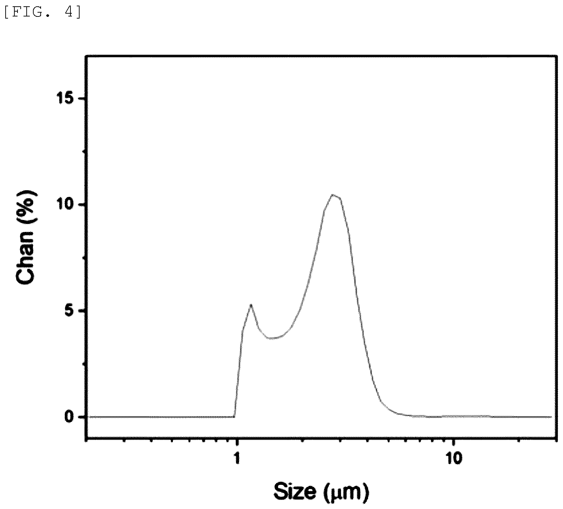

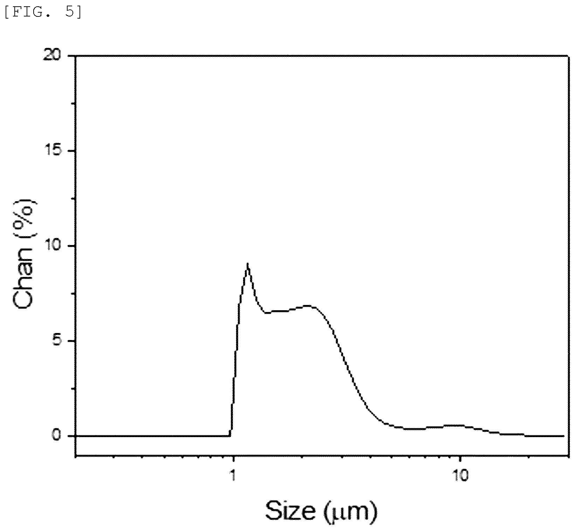

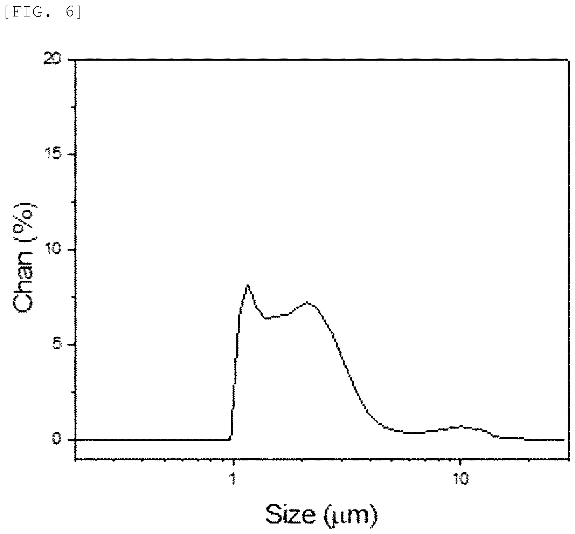

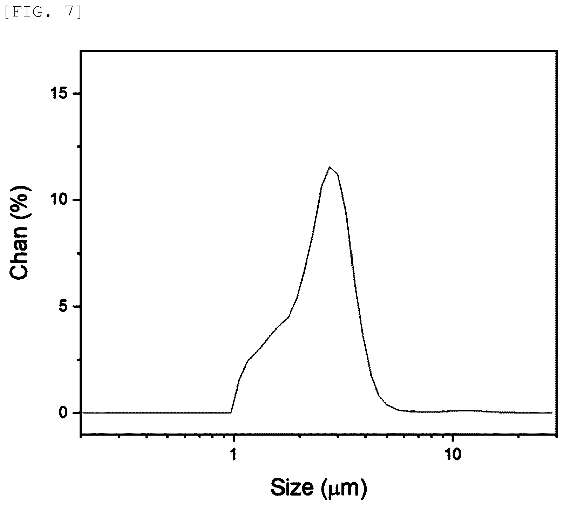

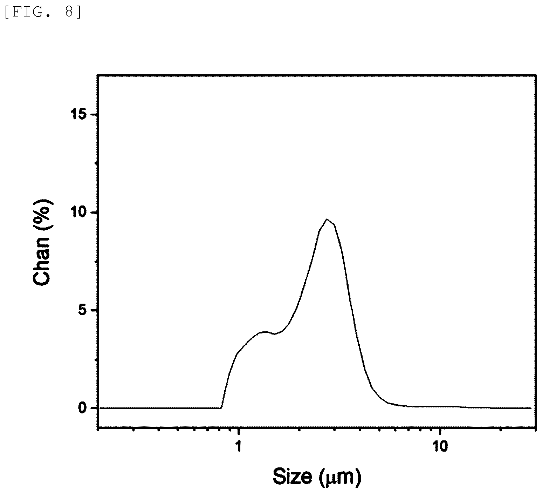

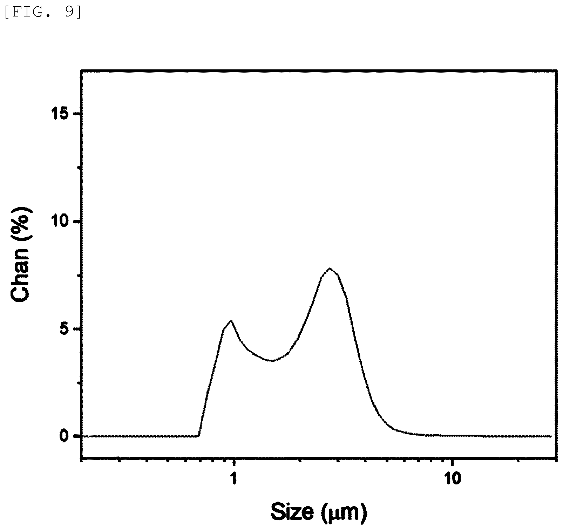

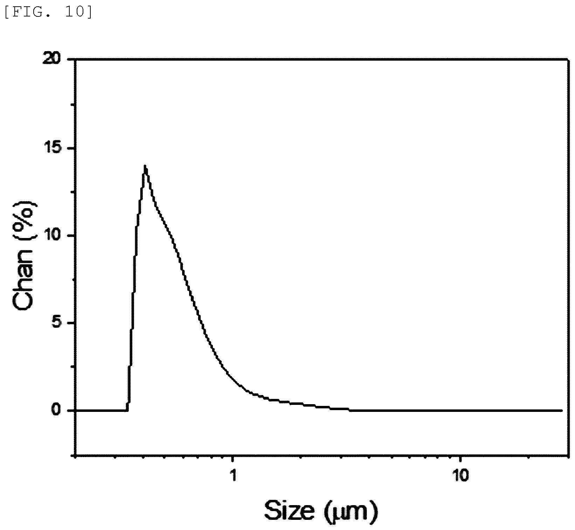

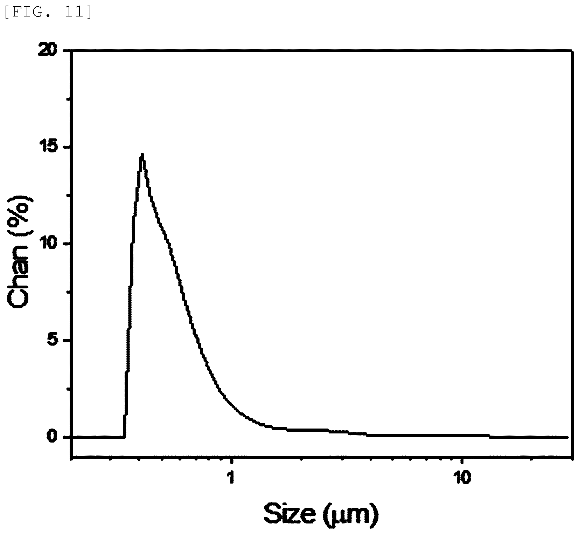

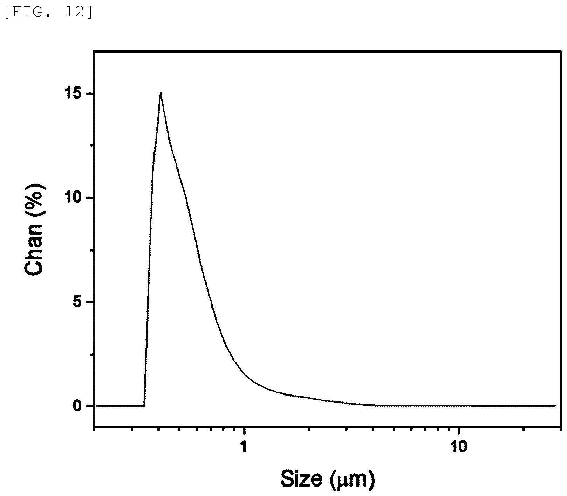

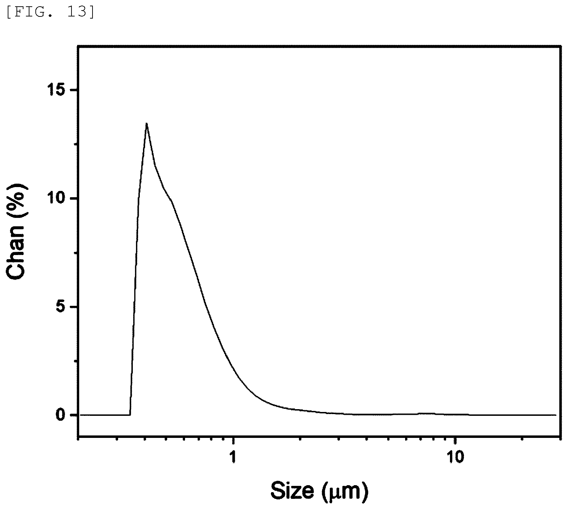

PSD graphs of the positive electrode active material particles of the positive electrodes prepared in Examples 1 to 9 are illustrated in FIGS. 1 to 9, respectively, PSD graphs of the positive electrode active material particles of the positive electrodes prepared in Comparative Examples 1 to 4 are illustrated in FIGS. 10 to 13, respectively, and the number of fine powder particles of less than 1 um based on the total number of positive electrode active material particles was calculated as % and presented in Table 2 below.

**Experimental Example 2**

Life Characteristics Evaluation

Lithium secondary batteries were prepared by using each of the positive electrodes prepared in Experimental Example 1, and life characteristics of each lithium secondary battery were evaluated.

In this case, a lithium (Li) metal disk was used as a negative electrode, and each lithium secondary battery was prepared by preparing an electrode assembly by disposing a separator between the positive electrode and the negative electrode, disposing the electrode assembly in a battery case, and then injecting an electrolyte solution into the case. In this case, as the electrolyte solution, an electrolyte solution, in which 1 M $LiPF_6$ was dissolved in an organic solvent in which ethylene carbonate:ethyl methyl carbonate:diethyl carbonate were mixed in a volume ratio of 3:3:4, was used.

Subsequently, each of the prepared lithium secondary batteries was charged at a constant current of 0.1 C to 4.25 V in a constant current/constant voltage (CC/CV) mode at 25°C (CV 0.05 C), and then discharged to 3.0 V in a CC mode to measure $1^{st}$ cycle initial charge capacity and discharge capacity.

Also, a charge and discharge cycle, in which each lithium secondary battery was charged to 4.25 V in a CC/CV mode at 45°C in a range of 3.0 V to 4.25 V (CV 0.05 C) and then discharged to 3.0 V in a CC mode, was repeated 30 times to measure a capacity retention in a $30^{th}$ cycle (discharge capacity in the $30^{th}$ cycle/initial discharge capacity $\times$ 100) of each lithium secondary battery. Measurement results are presented in Table 2 below.

[Table 2]

| | PSD measurement Amount of fine powder of less than 1 $\mu$m generated (%) | Initial charge capacity (25°C) (mAh/g) | Initial discharge capacity (25°C) (mAh/g) | Capacity retention (30th cycle) (%) |
|---|---|---|---|---|
| Example 1 | 27.077 | 229.3 | 207.9 | 97.5 |
| Example 2 | 12.517 | 231.6 | 206.8 | 98.1 |
| Example 3 | 5.919 | 232.3 | 207.3 | 98.1 |
| Example 4 | 0.084 | 231.3 | 208.2 | 98.6 |
| Example 5 | 0.140 | 231.3 | 208.2 | 98.6 |
| Example 6 | 0.153 | 230.5 | 205.7 | 99.2 |
| Example 7 | 0.031 | 232.2 | 207.0 | 98.8 |
| Example 8 | 1.499 | 232.0 | 204.6 | 99.4 |
| Example 9 | 5.796 | 231.8 | 204.0 | 99.6 |
| Comparative Example 1 | 73.961 | 228.2 | 210.1 | 97.0 |
| Comparative Example 2 | 74.102 | 229.6 | 212.5 | 97.1 |

(continued)

|  | PSD measurement Amount of fine powder of less than 1 $\mu$m generated (%) | Initial charge capacity (25°C) (mAh/g) | Initial discharge capacity (25°C) (mAh/g) | Capacity retention (30th cycle) (%) |
|---|---|---|---|---|
| Comparative Example 3 | 76.937 | 227.0 | 209.1 | 95.2 |
| Comparative Example 4 | 78.237 | 226.5 | 206.1 | 94.8 |

Referring to Table 2, with respect to Examples 1 to 9, it may be confirmed that amounts of fine powder of less than 1 um were significantly lower and capacity retentions in the 30th cycle were better than those of Comparative Examples 1 to 4.

When Examples 1 and 2 were compared, in a case in which the particle strengths of the first lithium transition metal oxides were the same, it may be confirmed that the amount of the fine powder of less than 1 um generated was further reduced when the particle strength of the second lithium transition metal oxide was higher. Also, when each of Examples 2 to 5 was compared, in a case in which the particle strengths of the second lithium transition metal oxides were the same, it may be confirmed that the particle strength of the first lithium transition metal oxide and the amount of the fine powder of less than 1 um generated were inversely proportional. Examples 5 to 9 were examples in which the mixing ratios of the first lithium transition metal oxide to the second lithium transition metal oxide were different, respectively, wherein, with respect to Examples 5 to 7 in which the first lithium transition metal oxide was included in a larger weight than the second lithium transition metal oxide, the amount of the fine powder of less than 1 um generated was maintained at a very low level as the amount of the second lithium transition metal oxide was increased, but, with respect to Examples 8, in which the first lithium transition metal oxide and the second lithium transition metal oxide were mixed at the same weight ratio, and with respect to Example 9 in which the second lithium transition metal oxide was included in a larger weight than the first lithium transition metal oxide, it may be confirmed that the amount of the fine powder of less than 1 um generated was increased slightly. However, even in a case in which there was the slight increase in the amount of the fine powder of less than 1 um generated, it may be confirmed that the examples exhibited excellent capacity retention in the 30th cycle while still satisfying a significantly low level of the amount of the fine powder of less than 1 um generated.

In contrast, with respect to Comparative Examples 1 and 2, a large amount of the fine powder of less than 1 um was generated and exhibited a relatively low 30th cycle capacity retention even if the first lithium transition metal oxide and the second lithium transition metal oxide were included in a weight ratio of 8:2 as in Examples 1 to 5 while Comparative Examples 1 and 2 included the second lithium transition metal oxide having a higher particle strength than the first lithium transition metal oxide. Also, even if Comparative Example 2 included the second lithium transition metal oxide having a higher particle strength than Comparative Example 1, the amount of the fine powder of less than 1 um generated was increased slightly so that it may be confirmed that the effect was not exhibited when the particle strength of the second lithium transition metal oxide did not satisfy the appropriate range. With respect to Comparative Examples 3 and 4, the second lithium transition metal oxide had a lower particle strength than the first lithium transition metal oxide, wherein a large amount of fine powder of less than 1 um was generated and capacity retentions in the 30th cycle were low.

As described above, through the positive electrode materials of Examples 1 to 9, in a case in which the configuration of the present invention was satisfied, since there was less cracking of the lithium transition metal oxide particles and occurrence of the resulting side reaction with the electrolyte solution may be minimized, it may be confirmed that excellent capacity characteristics and life characteristics may be achieved.

**Claims**

1. A positive electrode material comprising a first lithium transition metal oxide and a second lithium transition metal oxide having a smaller average particle diameter ($D_{50}$) than the first lithium transition metal oxide,

   wherein particle strength of the first lithium transition metal oxide is 100 MPa or more, and
   particle strength of the second lithium transition metal oxide is twice or more than the particle strength of the first lithium transition metal oxide,
   wherein, after placing a sample particle on glass, the particle strength is a value obtained by measuring a force until the particle breaks and a tip touches the glass on which the sample has been placed while applying a pressure of 100 mN with the tip.

2. The positive electrode material of claim 1, wherein the positive electrode material has a bi-modal particle size distribution.

3. The positive electrode material of claim 1, wherein the average particle diameter ($D_{50}$) of the second lithium transition metal oxide is 50% or less based on an average particle diameter ($D_{50}$) of the first lithium transition metal oxide.

4. The positive electrode material of claim 1, wherein the first lithium transition metal oxide and the second lithium transition metal oxide are included in a weight ratio of 1:10 to 1:0.1.

5. The positive electrode material of claim 1, wherein the second lithium transition metal oxide has the particle strength that is 2 to 10 times the particle strength of the first lithium transition metal oxide.

6. The positive electrode material of claim 1, wherein the first lithium transition metal oxide has an average particle diameter ($D_{50}$) of 6 um to 25 $\mu$m.

7. The positive electrode material of claim 1, wherein the particle strength of the first lithium transition metal oxide is in a range of 100 MPa to 300 MPa.

8. The positive electrode material of claim 1, wherein the second lithium transition metal oxide has the average particle diameter ($D_{50}$) of 1 um to 12 $\mu$m.

9. The positive electrode material of claim 1, wherein the second lithium transition metal oxide has the particle strength of 200 MPa to 1,000 MPa.

10. The positive electrode material of claim 1, wherein the first lithium transition metal oxide and the second lithium transition metal oxide each independently has a composition represented by Formula 1:

[Formula 1]     $Li_{1+a}Ni_xCo_yM^1_zM^2_wO_2$

wherein, in Formula 1,

$-0.05 \leq a \leq 0.30$, $0.6 \leq x < 1$, $0 < y < 0.4$, $0 < z < 0.4$, and $0 \leq w \leq 0.3$,
$M^1$ is at least one selected from manganese (Mn) and aluminum (Al), and
$M^2$ is at least one selected from the group consisting of tungsten (W), molybdenum (Mo), barium (Ba), cerium (Ce), fluorine (F), chromium (Cr), zirconium (Zr), vanadium (V), iron (Fe), titanium (Ti), zinc (Zn), silicon (Si), gallium (Ga), tin (Sn), phosphorus (P), sulfur (S), strontium (Sr), magnesium (Mg), tantalum (Ta), boron (B), lanthanum (La), hafnium (Hf), niobium (Nb), and yttrium (Y).

11. A positive electrode for a lithium secondary battery, the positive electrode comprising a positive electrode active material layer which includes the positive electrode material of any one of claims 1 to 10,

wherein the positive electrode active material layer has a porosity (vol%) of 10% to 30%, and
the positive electrode comprises particles having a particle diameter of less than 1 um in an amount of 50% or less based on the total number of particles in the positive electrode active material layer during measurement of particle size distribution (PSD).

12. A lithium secondary battery comprising the positive electrode for a lithium secondary battery of claim 11.

[FIG. 1]

[FIG. 2]

[FIG. 3]

[FIG. 4]

[FIG. 5]

[FIG. 6]

[FIG. 7]

[FIG. 8]

[FIG. 9]

[FIG. 10]

[FIG. 11]

[FIG. 12]

[FIG. 13]

## INTERNATIONAL SEARCH REPORT

| International application No. |
| --- |
| **PCT/KR2023/008680** |

### A.  CLASSIFICATION OF SUBJECT MATTER

**H01M 4/36**(2006.01)i; **H01M 4/525**(2010.01)i; **H01M 4/505**(2010.01)i; **H01M 4/131**(2010.01)i; **H01M 10/052**(2010.01)i; **H01M 4/02**(2006.01)i

According to International Patent Classification (IPC) or to both national classification and IPC

### B.  FIELDS SEARCHED

Minimum documentation searched (classification system followed by classification symbols)

H01M 4/36(2006.01); H01M 10/052(2010.01); H01M 10/0525(2010.01); H01M 4/13(2010.01); H01M 4/32(2006.01); H01M 4/505(2010.01); H01M 4/525(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 양극재(cathode material), 리튬 전이금속 산화물(lithium transition metal oxide), 입자 강도(particle strength), 입경(particle size)

### C.  DOCUMENTS CONSIDERED TO BE RELEVANT

| Category* | Citation of document, with indication, where appropriate, of the relevant passages | Relevant to claim No. |
| --- | --- | --- |
| X | KR 10-2021-0117212 A (LG CHEM, LTD.) 28 September 2021 (2021-09-28)<br>See paragraphs [0179]-[0181], [0184] and [0189]-[0190]; and claims 1-2 and 5-10. | 1-12 |
| A | KR 10-2022-0080727 A (LG ENERGY SOLUTION, LTD.) 14 June 2022 (2022-06-14)<br>See entire document. | 1-12 |
| A | KR 10-0895225 B1 (AGC SEIMI CHEMICAL CO., LTD.) 04 May 2009 (2009-05-04)<br>See entire document. | 1-12 |
| A | KR 10-2017-0135160 A (SAMSUNG SDI CO., LTD.) 08 December 2017 (2017-12-08)<br>See entire document. | 1-12 |
| A | US 2006-0257742 A1 (KATO, F. et al.) 16 November 2006 (2006-11-16)<br>See entire document. | 1-12 |

| ☐ Further documents are listed in the continuation of Box C. | ☑ See patent family annex. |
| --- | --- |

*    Special categories of cited documents:
"A"   document defining the general state of the art which is not considered to be of particular relevance
"D"   document cited by the applicant in the international application
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
| --- | --- |
| **20 September 2023** | **20 September 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/008680**

| Patent document cited in search report | | | Publication date (day/month/year) | Patent family member(s) | | | Publication date (day/month/year) |
|---|---|---|---|---|---|---|---|
| KR | 10-2021-0117212 | A | 28 September 2021 | CN | 115053368 | A | 13 September 2022 |
| | | | | EP | 4089764 | A1 | 16 November 2022 |
| | | | | JP | 2023-514346 | A | 05 April 2023 |
| | | | | US | 2023-0073433 | A1 | 09 March 2023 |
| | | | | WO | 2021-187907 | A1 | 23 September 2021 |
| KR | 10-2022-0080727 | A | 14 June 2022 | CN | 116569361 | A | 08 August 2023 |
| | | | | WO | 2022-124774 | A1 | 16 June 2022 |
| KR | 10-0895225 | B1 | 04 May 2009 | AU | 2003-266620 | A1 | 19 April 2004 |
| | | | | CN | 100382363 | C | 16 April 2008 |
| | | | | CN | 100685542 | A | 19 October 2005 |
| | | | | KR | 10-0700962 | B1 | 28 March 2007 |
| | | | | KR | 10-2005-0030899 | A | 31 March 2005 |
| | | | | KR | 10-2006-0127272 | A | 11 December 2006 |
| | | | | TW | 200410438 | A | 16 June 2004 |
| | | | | TW | 200830619 | A | 16 July 2008 |
| | | | | TW | I313081 | B | 01 August 2009 |
| | | | | TW | I322526 | B | 21 March 2010 |
| | | | | US | 2006-0263690 | A1 | 23 November 2006 |
| | | | | US | 2009-0017383 | A1 | 15 January 2009 |
| | | | | US | 2010-0294985 | A1 | 25 November 2010 |
| | | | | US | 7824803 | B2 | 02 November 2010 |
| | | | | US | 7981547 | B2 | 19 July 2011 |
| | | | | WO | 2004-030125 | A1 | 08 April 2004 |
| KR | 10-2017-0135160 | A | 08 December 2017 | US | 10826058 | B2 | 03 November 2020 |
| | | | | US | 2017-0346133 | A1 | 30 November 2017 |
| US | 2006-0257742 | A1 | 16 November 2006 | CN | 100383997 | C | 23 April 2008 |
| | | | | CN | 100806353 | A | 19 July 2006 |
| | | | | EP | 1699099 | A1 | 06 September 2006 |
| | | | | EP | 1699099 | A4 | 24 December 2008 |
| | | | | JP | 2007-045958 | A | 29 November 2007 |
| | | | | US | 7718315 | B2 | 18 May 2010 |
| | | | | WO | 2005-045958 | A1 | 19 May 2005 |

Form PCT/ISA/210 (patent family annex) (July 2022)

**REFERENCES CITED IN THE DESCRIPTION**

**Patent documents cited in the description**

- KR 1020220077414
- KR 20210117212 A